# EUROPÄISCHE PATENTSCHRIFT

(11) **EP 4 236 702 B1**
(45) Veröffentlichungstag und Bekanntmachung des Hinweises auf die Patenterteilung: **05.08.2026**
(21) Anmeldenummer: 21801085.8
(22) Anmeldetag: 26.10.2021
(51) Int. Cl.: A23P 20/25, A23L 19/00, A23N 4/12

(54) **VERFAHREN ZUM FORMEN VON OBST UND GEMÜSE**
PROCESS FOR SHAPING FRUIT OR VEGETABLES
PROCEDE POUR FAÇONNER DES FRUITS OU LEGUMES

(30) Priorität: 28.10.2020 DE 102020128303
(43) Veröffentlichungstag der Anmeldung: 06.09.2023
(73) Patentinhaber: Fraunhofer-Gesellschaft zur Förderung der angewandten Forschung e.V., 80686 München (DE)
(72) Erfinder: KAISER, Christian, 83626 Valley (DE); SEIFERT, Severin, 83626 Valley (DE); KALINA, Christine, 83626 Valley (DE); DITTRICH, Sebastian, 83626 Valley (DE)
(74) Vertreter: Maiwald GmbH
(86) Internationale Anmeldenummer: PCT/EP2021/079596
(87) Internationale Veröffentlichungsnummer: WO 2022/090182

(56) Entgegenhaltungen:
- WO-A1-91/07883
- CARCEL ET AL: "Influence of ultrasound intensity on mass transfer in apple immersed in a sucrose solution", JOURNAL OF FOOD ENGINEERING, ELSEVIER, AMSTERDAM, NL, vol. 78, no. 2, 1 January 2007 (2007-01-01), pages 472 - 479, XP005584396, ISSN: 0260-8774, DOI: 10.1016/J.JFOODENG.2005.10.018
- LU XU ET AL: "Optimization of ultrasonic-microwave assisted extraction of oligosaccharides from lotus (Nelumbo nuciferaGaertn.) seeds", INDUSTRIAL CROPS AND PRODUCTS, vol. 107, 2017, pages 546 - 557, XP085199596, ISSN: 0926-6690, DOI: 10.1016/J.INDCROP.2017.05.060

## Beschreibung

Die vorliegende Erfindung betrifft ein Verfahren zum Formen von Obst und Gemüse mittels Ultraschallwellen, ein Convenience Lebensmittel, das derart geformtes Obst und Gemüse umfasst sowie die Verwendung von Ultraschallwellen zum Formen von Obst und Gemüse.

### Technischer Hintergrund

Im Bereich der Nahrungsmittel gehören Kürbisgewächse zum alltäglichen Gebrauch, da sie in Geschmack breit variieren und zudem auch in Kombination mit anderen Zutaten z.B. bei einer "gefüllten" Zubereitung funktionieren. Ein hoher Nährstoffgehalt sowie ein hoher Wasseranteil sind neben der lokalen Verfügbarkeit weitere Vorteile die diese Gemüsesorte in sich vereint.

Angetrieben vom gesellschaftlichen Wandel in Bezug auf Nahrungsmittel, hat auch die industrielle Verwertung, allen voran die Convenience- und "Fast Food"-Industrie ein Auge auf diese "Superfoods" geworfen. Allerdings ist der Industriezweig sehr stark auf Standardisierung und Simplifizierung angewiesen. Für Fast Food Restaurants sind Parameter wie schnelle Zubereitung, schnelle Servierfähigkeit sowie schneller Verzehr unumgänglich. Das bedeutet beispielsweise im Falle von Gurken, dass diese in ihrer Form standardisiert werden müssten. Zudem ist deren Aushöhlung erforderlich, um mit Füllungen eine Aufweitung des Geschmackangebotes zu erreichen. Während für die äußere Formgebung z.B. durch einen Wachstumsvorgang in einem definierten Glaskörper oder eben durch die Abtrennung der Schale Lösungen gefunden wurden, stellt das Aushöhlen aber noch ein Problem dar. Nicht unbedingt in der Ausführung oder wegen des Anteils an Kernen (Zucht von kernlosen Gurken), aber im Anfallen von Reststoffen. Der Höhlungsvorgang entnimmt nämlich große Teile des Fruchtfleisches. Zudem gehören Gurken laut dem Bundeszentrum für Ernährung zu den schwer verdaulichen Sorten mit blähender Wirkung. Letzteres lässt sich z.B. durch einen Gar-Vorgang verringern. Allerdings wirken sich diese Zwischenschritte wieder auf die Zubereitungszeit aus.

Ein Fortschritt wäre demnach, wenn ein Nahrungsmittelaufbereitungsvorgang (Garung) direkt mit dem Aushöhlen bzw. dem Entfernen der Schale von Obst bzw. Gemüse kombiniert werden könnte, aber dabei ein Minimum an Reststoffen anfallen würde.

Aus dem Stand der Technik, wie beispielsweise DE 10 2014 112 083 A1, EP 1 867 236 A2, US 3,382,900, US 7,096,777 B1 , WO 91/07883 A1 oder WO 03/043443 sind automatisierte mechanische Verfahren zur Formung und Aushöhlung bestimmter Obst und Gemüsesorten bekannt. Diese haben jedoch den Nachteil, dass zum einen aufgrund des Verfahrens des mechanischen Ausschabens das ausgeschabte Fruchtfleisch anfällt, das entweder weiterverwendet oder entsorgt werden muss, wodurch zusätzliche Kosten im Herstellungsprozess anfallen. Zum anderen sind die im Stand der Technik vorgestellten mechanischen Vorrichtungen wenig flexibel, so dass an das Obst und Gemüse enge Formanforderungen gestellt wird, um ein zufriedenstellendes Ergebnis zu erzielen. Dies führt zu einer großen Menge Ausschuss von prinzipiell genießbarem Obst und Gemüse, das lediglich durch z.B. Krümmung, Länge oder Dicke den eng gesetzten Formanforderungen nicht entspricht. Auch dienen die Verfahren aus dem Stand der Technik lediglich der Formung von Obst und Gemüse. Das so geformte Obst und Gemüse muss in weiteren Schritten z.B. durch Garen verzehrfähig gemacht werden.

In Carcel et al: "influence of ultrasound intensity on mass transfer in apple immersed in a sucrose solution, Journal of Food Engineering, Bd. 78, Nr. 2 (2007), S.472-479 wurden die Auswirkungen von Ultraschall auf Apfelstücke in Zuckerlösung beschrieben. Dabei wurde herausgefunden, dass abhängig von der Intensität der Ultraschallwellen ein erhöhter Wasserverlust in den Apfelstücken auftritt. Nicht beschrieben wurde in diesem Versuchsaufbau die Formung oder Aushöhlung der Apfelstücke mittels Ultraschall.

Der vorliegenden Erfindung liegt die Aufgabe zugrunde die vorstehend aufgeführten Nachteile zu überwinden. Es wurde überraschend festgestellt, dass mittels Sonochemie, also akustischer Kavitation durch Ultraschallwellen, Obst und Gemüse ohne größeren Anfall von Reststoffen unabhängig von Formvorgaben geformt und gleichzeitig durch eine Art Mikrogarung verzehrfähiger gemacht werden kann.

### Zusammenfassung der Erfindung

Die vorliegende Erfindung betrifft ein Verfahren zum Formen von Obst und Gemüse umfassend folgende Verfahrensschritte:
a) Bereitstellen eines Stücks Obst oder Gemüse;
b) Bestrahlen des Stücks Obst oder Gemüse mit Ultraschallwellen;
c) Erhitzen der Flüssigkeit in dem Fruchtfleisch des Stücks Obst oder Gemüse durch akustische Kavitation;
d) Aufbrechen der Zellstrukturen des Fruchtfleischs durch Flüssigkeitsverdampfung;
e) Formen einer Aushöhlung in dem Stück Obst oder Gemüse,
wobei die Aushöhlung in dem Stück Obst oder Gemüse geformt wird indem die aufgebrochenen Zellstrukturen des Fruchtfleischs durch den Impuls der Ultraschallwellen zur Seite gedrückt werden.

In einem weiteren Aspekt betrifft die vorliegende Erfindung ein Convenience Lebensmittel umfassend ein oder mehrere Stücke Obst oder Gemüse, wobei die ein oder mehreren Stücke Obst oder Gemüse mit dem Verfahren wie hierin beschrieben geformt wird.

In einem zusätzlichen Aspekt betrifft die vorliegende Erfindung die Verwendung von Ultraschallwellen zum Formen von Obst oder Gemüse durch akustische Kavitation.

### Detaillierte Beschreibung der Erfindung

Die vorliegende Erfindung betrifft ein Verfahren zum Formen von Obst und Gemüse umfassend folgende Verfahrensschritte:
a) Bereitstellen eines Stücks Obst oder Gemüse;
b) Bestrahlen des Stücks Obst oder Gemüse mit Ultraschallwellen;
c) Erhitzen der Flüssigkeit in dem Fruchtfleisch des Stücks Obst oder Gemüse durch akustische Kavitation;
d) Aufbrechen der Zellstrukturen des Fruchtfleischs durch Flüssigkeitsverdampfung;
e) Formen einer Aushöhlung in dem Stück Obst oder Gemüse,
wobei die Aushöhlung in dem Stück Obst oder Gemüse geformt wird indem die aufgebrochenen Zellstrukturen des Fruchtfleischs durch den Impuls der Ultraschallwellen zur Seite gedrückt werden.

Das Verfahren eignet sich für jegliches Obst oder Gemüse, das aufgrund eines festen Fruchtfleischs geeignet ist durch Schälen und Aushöhlung geformt zu werden. Besonders geeignet sind Kürbisgewächse (Cucurbitacaea), wie Kürbisse, Melonen, Gurken und Zucchini, speziell Gurken und Zucchini.

Die Ultraschallwellen werden vorzugsweise in einem Ultraschallprozessor erzeugt. Derartige Ultraschallprozessoren sind im Stand der Technik beispielsweise bei Ultraschallfertigungsverfahren wie Ultraschallschweißen oder Ultraschallschwingläppen bekannt und benötigen für das erfindungsgemäße Verfahren keine weiteren Modifikationen.

Der Ultraschall wird vorzugsweise über eine Sonotrode auf das Stück Obst oder Gemüse übertragen. Die Sonotrode ist dabei üblicherweise das einzige Bauteil eines Ultraschallprozessors, das in direktem Kontakt mit dem Stück Obst oder Gemüse ist. Vorzugsweise wird die Sonotrode in das Fruchtfleisch des Stücks Obst oder Gemüse eingetaucht. Dabei wird die Flüssigkeit des Fruchtfleischs durch akustische Kavitation erhitzt.

Unter Kavitation versteht man die Bildung von Blasen und deren Oszillation unter Einfluss hochfrequenter Druck- bzw. Dichteschwankungen in Flüssigkeiten. Nichtelastisches Medienverhalten führt zum Aufreißen der kontinuierlichen Fluidphase und zur Bildung von Blasen. Im Fluid vorhandene Inhomogenitäten begünstigen die Kavitation. Nach Entstehung der Blasen diffundieren sukzessive Dampf aus der umgebenden Flüssigkeit oder in der Flüssigkeit gelöste Gase in die Blase. Bei der "Dampfkavitation" (harte/ transiente Kavitation) implodieren die Blasen bereits nach wenigen Oszillationen unter punktueller Freisetzung hoher Energieintensitäten. Wird die Kavitation durch Schallwellen, wie Ultraschallwellen, verursacht, spricht man von akustischer Kavitation.

Die Sonotrode ist vorzugsweise verstellbar gelagert. Die verstellbar gelagerte Sonotrode kann durch Positionsverstellung in mindestens einer Dimension, vorzugsweise in allen drei Dimensionen, und/oder durch Verstellung des Winkels an die individuelle Form des Stücks Obst oder Gemüse angepasst werden.

Somit eignet sich das Verfahren zum einem für unterschiedliche Arten von Obst und Gemüse mit unterschiedlichen generellen Formen, wie beispielsweise Salatgurke und Wassermelone, sowie auch innerhalb einer Obst- oder Gemüsesorte für Stücke Obst oder Gemüse, die beispielsweise in Krümmung, Länge oder Dicke von der üblichen Norm abweichen.

Durch die Druck- und Dichteschwankungen der Ultraschallwellen während der akustischen Kavitation erhitzt sich die Flüssigkeit des Fruchtfleischs üblicherweise in unmittelbarer Nachbarschaft zu der eingetauchten Sonotrode. Durch die Erhitzung wird das Fruchtfleisch vorzugsweise mikrogegart, also mittels Erhitzung durch die Ultraschallwellen gegart.

Die Aushöhlungs- und Garungsschritte können auch zeitlich und/oder räumlich getrennt werden.

So kann beispielsweise das Stück Obst oder Gemüse in einem ersten Schritt wie hierin beschrieben ausgehöhlt werden. Das ausgehöhlte Stück Obst oder Gemüse kann dann in einem zweiten Schritt mit Hilfe von Ultraschallwellen gegart werden. Vor dem Garen kann das ausgehöhlte Stück Obst oder Gemüse dabei mit einem Lebensmittel, beispielsweise einer Käsezubereitung oder einer Fleischzubereitung, wie einer Hackfleischzubereitung, gefüllt werden. Dieses Lebensmittel kann dann bei der Erhitzung der Flüssigkeit des Fruchtfleischs ebenfalls erhitzt und gegebenenfalls mikrogegart werden.

Durch den Garvorgang wird das Stück Obst oder Gemüse, speziell Kürbisgewächse, bekömmlicher für die Verdauung. Hierdurch kann ein weitere Garvorgang bei der Herstellung eines Convenience Lebensmittels gespart werden. Es kann somit mit Hilfe des erfindungsgemäßen Verfahrens ein bereits verzehrfähiges Lebensmittel hergestellt werden.

Die Ultraschallwellen haben vorzugsweise eine Frequenz von 20 bis 2000 kHz. Die Flüssigkeit im Fruchtfleisch kann punktuell Temperaturen von bis zu 5000 K ausgesetzt sein. Ferner kann die Flüssigkeit im Fruchtfleisch punktuell Drücken von bis zu 1000 bar ausgesetzt sein. Schließlich kann die Flüssigkeit im Fruchtfleisch punktuell einer Strömungsgeschwindigkeit von bis zu 400 km/h ausgesetzt sein. Lokal kann es beim Erhitzen zu Temperatursprüngen von bis zu 110 K/s kommen. Die erzielten Bedingungen sind dabei üblicherweise abhängig von der Frequenz der Ultraschallwellen.

Bei entsprechender Einwirkdauer der Ultraschallwellen erhitzt sich die Flüssigkeit des Fruchtfleischs üblicherweise so stark, dass sie verdampft und somit die Zellstrukturen des Fruchtfleischs aufbrechen. Das so aufgebrochene Fruchtfleisch verliert dadurch seine zelluläre Stabilität und wird durch den Impuls der Ultraschallwellen an die Seitenwände des Stücks Obst oder Gemüse gedrückt. Es entsteht dadurch eine Aushöhlung in dem Stück Obst oder Gemüse.

Die Seitenwände, die nicht durch die Ultraschallwellen beeinflusst sind, werden vorzugsweise durch das angedrückte Fruchtfleisch verdichtet und verstärkt und bilden somit eine stabile Gefäßstruktur, die zur Befüllung z.B. mit geeigneten Lebensmitteln, wie beispielsweise Kompotte, Chutneys, Käsezubereitungen, Fleischzubereitungen, gestückeltes oder gemahlenes Obst oder Gemüse oder Mischungen daraus, geeignet ist.

Zusätzlich zu Aushöhlungen in dem Stück Obst oder Gemüse kann mit den hierin beschriebenen Verfahren auch die Haut oder Schale des Stücks Obst oder Gemüse teilweise oder vollständig entfernt werden.

Das hierin beschriebene Verfahren kann auch dazu verwendet werden, Muster oder mehrdimensionale Strukturen in ein Stück Obst oder Gemüse zu formen.

In einem weiteren Aspekt betrifft die vorliegende Erfindung ein Convenience Lebensmittel umfassend ein oder mehrere Stücke Obst oder Gemüse, wobei die ein oder mehreren Stücke Obst oder Gemüse mit dem Verfahren wie hierin beschrieben geformt sind.

Das Convenience Lebensmittel enthält vorzugsweise das mit dem hierin beschriebenen Verfahren geformte Stück Obst oder Gemüse, das vorzugsweise mit weiteren Lebensmittel(n), wie beispielsweise Kompotte, Chutneys, Käsezubereitungen, Fleischzubereitungen, gestückeltes oder gemahlenes Obst oder Gemüse oder Mischungen daraus, gefüllt ist.

Bei dem Convenience Lebensmittel kann es sich um ein Lebensmittel für den Endverbrauchermarkt oder für den Restaurantbetrieb handeln.

Das Lebensmittel für den Endverbrauchermarkt ist vorzugsweise ein Fertiggericht, üblicherweise aus dem Verbrauchermarkt, das entweder zubereitungsfertig oder bereits verzehrfertig ist.

Das Lebensmittel für den Restaurantbetrieb ist vorzugsweise ein Gericht oder Teil eines Gerichts eines Fastfood Restaurants.

Das erfindungsgemäße Convenience Lebensmittel hat für den Markt folgende Vorteile:
- Durch das erfindungsgemäße Verfahren fallen weniger Reststoffe oder Abfälle an, da das Fruchtfleisch nicht herausgeschnitten, sondern an die Seitenwände des Stücks Obst oder Gemüse gedrückt werden.
- Durch die Stabilisierung der Seitenwände des geformten Stücks Obst oder Gemüse entsteht ein stabiles Gefäß für Füllungen. Dies eröffnet den Markt für gefülltes Obst oder Gemüse mit Obst oder Gemüsesorten, die bisher aufgrund ihrer mangelnden Stabilität als ungeeignet zur Befüllung betrachtet wurden.
- Mit dem erfindungsgemäßen Verfahren kann Obst und Gemüse mit unterschiedlichen Formen und Größen verarbeitet werden. Es fällt somit weniger Ausschuss an generell genießbarem Obst und Gemüse an.
- Mit dem erfindungsgemäßen Verfahren kann Obst und Gemüse in einem Verfahren geformt und gegart werden. Somit entfällt ein weiterer Zubereitungsschritt und öffnet den Markt für Obst und Gemüsesorten, die roh schwer verdaulich sind.
- Durch das Mikrogarverfahren mit Hilfe der Schallwellen lässt sich auch zu einem gewissen Grad der Geschmack des erfindungsgemäßen Convenience Lebensmittels steuern. Aufgrund der akustischen Kavitation können chemische Aufschlussprozesse in dem Stück Obst oder Gemüse oder ggf. der den Ultraschallwellen ausgesetzten Füllung in Gang gesetzt werden, die den Geschmack beeinflussen können. Zudem sind keine Geschmacksveränderungen durch Pyrolyse wie bei anderen Aufheizmethoden wie Kochen, Braten oder Frittieren zu erwarten.
- Der Wärmeeintrag und somit der Garvorgang kann zudem durch die Sonotrode gezielt lokal gesteuert werden.
- Mit Hilfe des erfindungsgemäßen Verfahrens lässt sich auch gekühltes oder tiefgefrorenes Obst oder Gemüse formen und gleichzeitig auf eine gewünschte Verzehrtemperatur bringen. Ein zusätzlicher Erwärmungsschritt kann somit entfallen.
- Mit dem erfindungsgemäßen Verfahren lassen sich somit Convenience Lebensmittel in einem einfachen, standardisierten und somit kostengünstigen Verfahren ohne übermäßige Abfälle und mit wenigen Verfahrensschritten herstellen, wie von der Fastfood-Industrie benötigt.

In einem zusätzlichen Aspekt betrifft die vorliegende Erfindung die Verwendung von Ultraschallwellen zum Formen von Obst oder Gemüse durch akustische Kavitation. Die Schallwellen werden dabei vorzugsweise verwendet nach allen Aspekten und Ausführungsformen wie für das erfindungsgemäße Verfahren hierin beschrieben.

### Beispiel

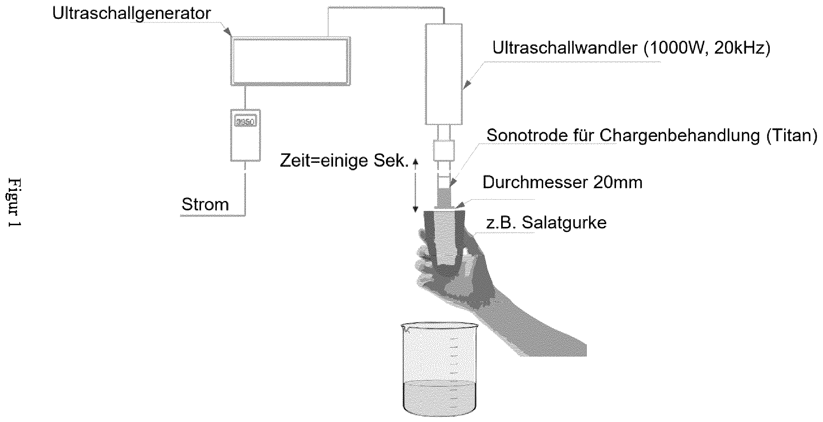

Das erfindungsgemäße Verfahren zum Formen von Obst und Gemüse wird im Folgenden beispielhaft anhand der Aushöhlung einer Salatgurke illustriert:
Der Versuchsaufbau ist in Figur 1 schematisch dargestellt:
Für die Behandlung einer Salatgurke wurde eine Sonotrode aus Titan mit einem Durchmesser von 20 mm verwendet. Für andere Obst - und Gemüseformen kann die Sonotrode gegen andere Sonotroden mit größerem oder kleinerem Durchmesser ausgetauscht werden.

Die Sonotrode ist mit einem Ultraschallgerät umfassen einen Ultraschallgenerator und einen Ultraschallwandler verbunden, der mit einer Leistung von 1000 W bei 20 kHz betrieben wurde. Die Leistung kann ebenfalls individuell auf das zu formende Stück Obst oder Gemüse angepasst werden.

Die Salatgurke wird für einige Sekunden mit der Sonotrode in Kontakt gebracht und dabei entlang der Sonotrode nach oben geführt. Weiterhin sind je nach Form des Stücks Obst oder Gemüse auch andere Bewegungen entlang der Sonotrode, wie beispielsweise seitliche oder kreisende Bewegungen, möglich.

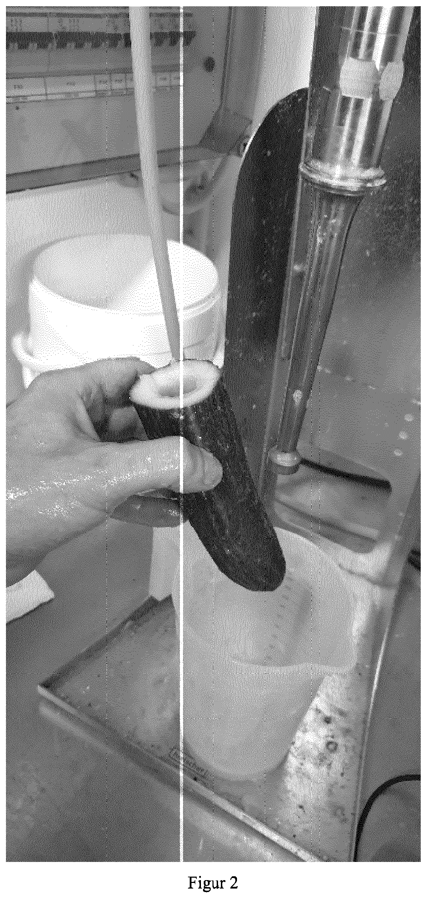

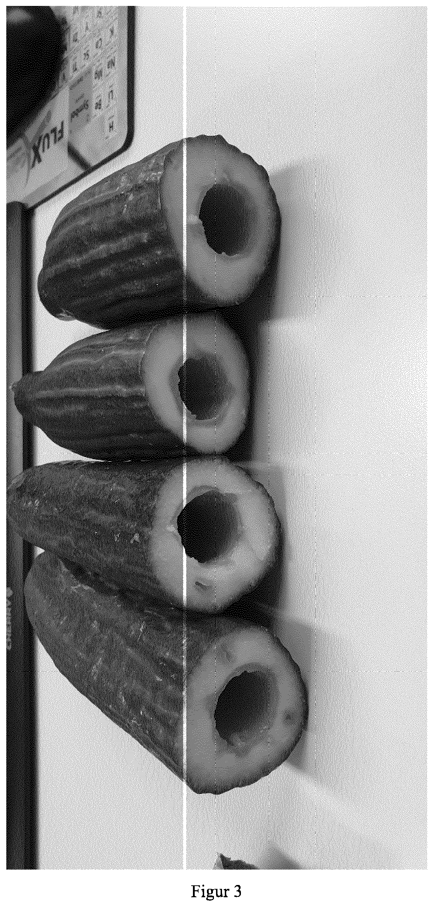

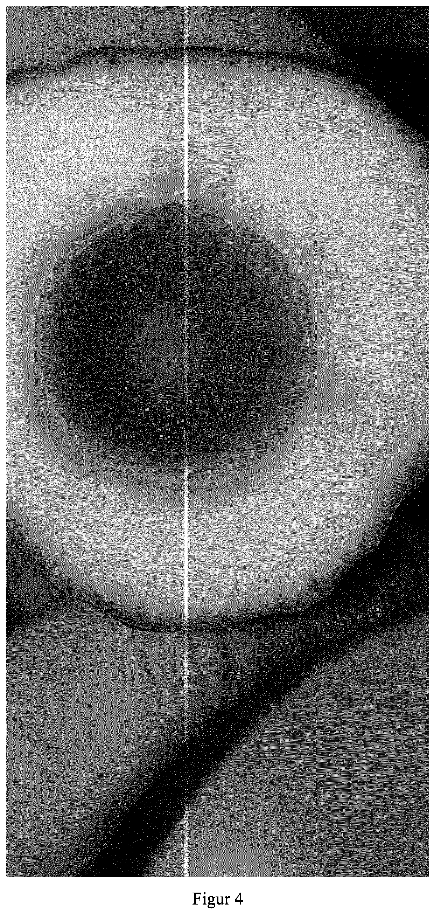

Der Ultraschall erzeugt ein zylindrisches Loch in der Salatgurke, wie in den Figuren 2-4 gezeigt, ohne das umliegende Gewebe der Salatgurke zu beeinträchtigen.

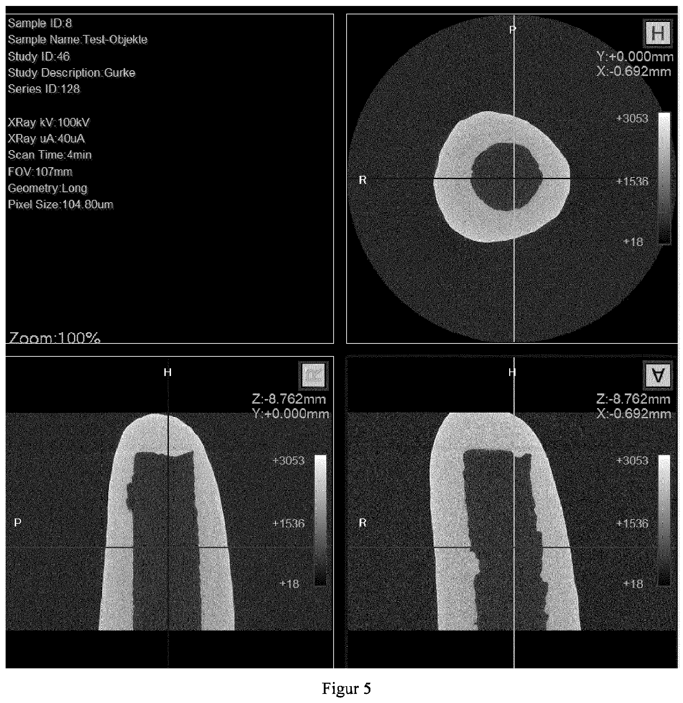

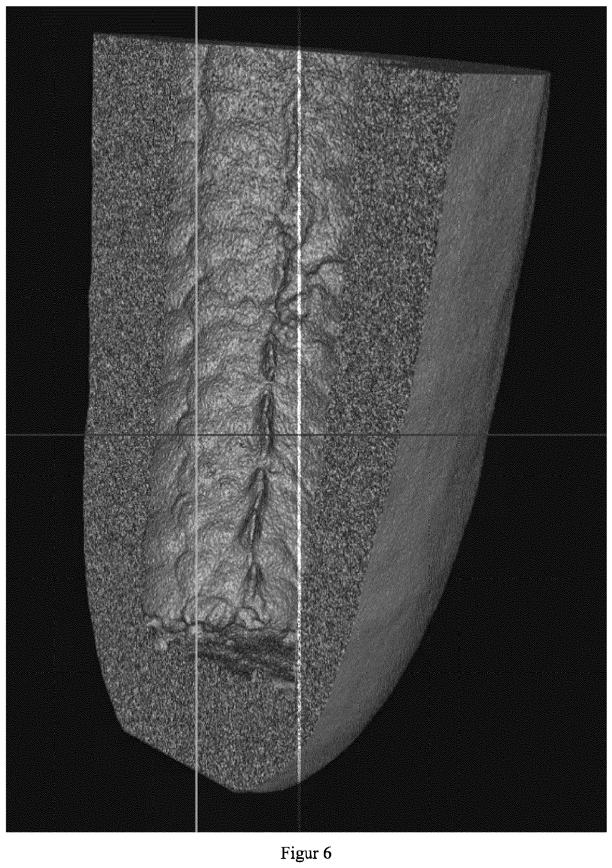

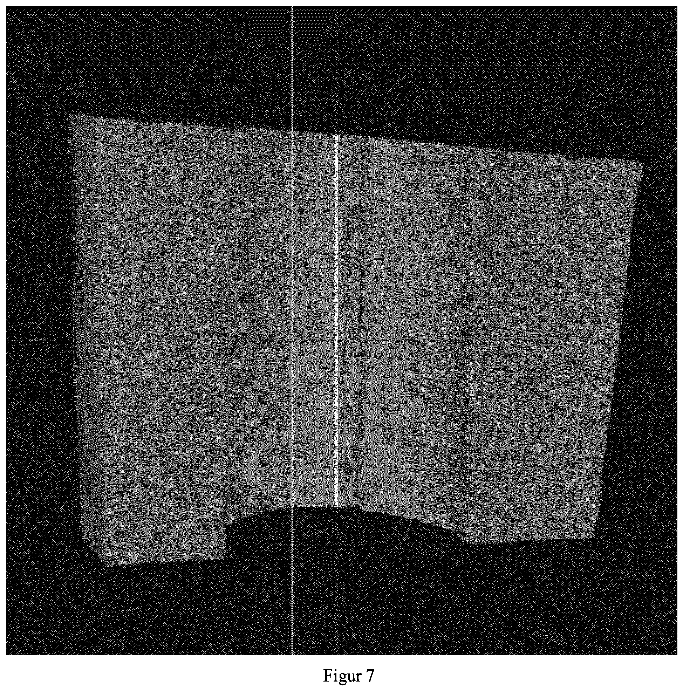

In den Figuren 5-7 zeigen Röntgentomographieaufnahmen die glatten Flächen des zylindrischen Lochs ohne Beeinträchtigung des umliegenden Gewebes. Speziell in den Figuren 6 und 7 ist zu erkennen, dass das Fruchtfleisch an die Seitenwände des entstandenen zylindrischen Lochs gedrückt ist.

Während der Formgebung entsteht außer der austretenden Gewebeflüssigkeit aus der Kern- bzw. Höhlungszone kein weiterer Abfall.

## Patentansprüche

1. Verfahren zum Formen von Obst und Gemüse umfassend folgende Verfahrensschritte:
a) Bereitstellen eines Stücks Obst oder Gemüse;
b) Bestrahlen des Stücks Obst oder Gemüse mit Ultraschallwellen;
c) Erhitzen der Flüssigkeit in dem Fruchtfleisch des Stücks Obst oder Gemüse durch akustische Kavitation;
d) Aufbrechen der Zellstrukturen des Fruchtfleischs durch Flüssigkeitsverdampfung;
e) Formen einer Aushöhlung in dem Stück Obst oder Gemüse,
wobei die Aushöhlung in dem Stück Obst oder Gemüse geformt wird indem die aufgebrochenen Zellstrukturen des Fruchtfleischs durch den Impuls der Ultraschallwellen zur Seite gedrückt werden.

2. Das Verfahren gemäß Anspruch 1, wobei das Stück Obst oder Gemüse mittels einer Sonotrode mit Ultraschallwellen bestrahlt wird, bevorzugt mittels einer verstellbar gelagerten Sonotrode.

3. Das Verfahren gemäß einem der Ansprüche 1 bis 2, wobei die Ultraschallwellen eine Frequenz im Bereich von 20 bis 2000 kHz haben.

4. Das Verfahren gemäß einem der Ansprüche 1 bis 3, wobei die Flüssigkeit in dem Fruchtfleisch beim Erhitzen durch akustische Kavitation jeweils punktuell einer Temperatur von bis zu 5000 K und/oder einem Druck von bis zu 1000 bar und/oder einer Strömungsgeschwindigkeit von bis zu 400 km/h ausgesetzt wird.

5. Das Verfahren gemäß einem der Ansprüche 1 bis 4, wobei während des Erhitzens der Flüssigkeit das Fruchtfleisch mikrogegart wird.

6. Das Verfahren gemäß einem der Ansprüche 1 bis 5, wobei das ausgehöhlte Stück Obst oder Gemüse mit Lebensmitteln gefüllt wird, danach mit Ultraschallwellen bestrahlt wird und diese Füllung während des Erhitzens der Flüssigkeit mitgegart wird.

7. Das Verfahren gemäß einem der Ansprüche 1 bis 6, wobei die Haut oder Schale des Stücks Obst oder Gemüse durch akustische Kavitation teilweise oder vollständig entfernt wird.

8. Das Verfahren gemäß einem der Ansprüche 1 bis 7, wobei die Aushöhlungen Muster oder mehrdimensionale Strukturen in dem Stück Obst oder Gemüse ausbilden.

9. Das Verfahren gemäß einem der Ansprüche 1 bis 8, wobei das Stück Obst oder Gemüse ausgewählt ist aus Kürbisgewächsen, bevorzugt Kürbissen, Melonen, Gurken und Zucchini.

10. Ein Convenience Lebensmittel umfassend ein oder mehrere Stücke Obst oder Gemüse, wobei die ein oder mehreren Stücke Obst oder Gemüse mit dem Verfahren gemäß einem der Ansprüche 1 bis 9 geformt sind.

11. Die Verwendung von Ultraschallwellen zum Formen von Obst oder Gemüse durch akustische Kavitation.

## Claims

1. A method for forming fruit and vegetables, comprising the following method steps:
a) providing a piece of fruit or vegetable;
b) irradiating the piece of fruit or vegetable with ultrasonic waves;
c) heating the liquid in the pulp of the piece of fruit or vegetable by acoustic cavitation;
d) disrupting the cell structures of the pulp by liquid evaporation;
e) forming a cavity in the piece of fruit or vegetable, wherein the forming of the cavity in the piece of fruit or vegetable involves pressing the disrupted cell structures of the pulp to the side.

2. The method as claimed in claim 1, wherein the piece of fruit or vegetable is irradiated with ultrasonic waves by means of a sonotrode, preferably by means of an adjustably mounted sonotrode.

3. The method as claimed in any one of claims 1 or 2, wherein the ultrasonic waves have a frequency in the range from 20 to 2000 kHz.

4. The method as claimed in any one of claims 1 to 3, wherein the liquid in the pulp during the heating by acoustic cavitation is exposed locally to a temperature of up to 5000 K and/or a pressure of up to 1000 bar and/or a flow rate of up to 400 km/h.

5. The method as claimed in any one of claims 1 to 4, wherein during the heating of the liquid, the pulp is microcooked.

6. The method as claimed in any one of claims 1 to 5, wherein the excavated piece of fruit or vegetable is filled with foods and thereafter irradiated with ultrasonic waves and during the heating of the liquid this filling is cooked too.

7. The method as claimed in any one of claims 1 to 6, wherein the skin or peel of the piece of fruit or vegetable is removed partially or entirely by acoustic cavitation.

8. The method as claimed in any one of claims 1 to 7, wherein the cavities form patterns or multidimensional structures in the piece of fruit or vegetable.

9. The method as claimed in any one of claims 1 to 8, wherein the piece of fruit or vegetable is selected from cucurbits, preferably from pumpkins, melons, cucumbers, and zucchini.

10. A convenience food item comprising one or more pieces of fruit or vegetable formed with the method as claimed in any of claims 1 to 9.

11. The use of ultrasonic waves for forming fruit or vegetables by acoustic cavitation.

## Revendications

1. Procédé de façonnage de fruits et légumes, comprenant des étapes suivantes :
a) fourniture d'un morceau de fruit ou de légume ;
b) irradiation du morceau de fruit ou de légume avec des ondes ultrasonores ;
c) chauffage du liquide dans la chair du morceau de fruit ou de légume par cavitation acoustique ;
d) rupture des structures cellulaires de la chair par évaporation liquide ;
e) façonnage d'une cavité dans le morceau de fruit ou de légume, la cavité dans le morceau de fruit ou de légume étant façonnée en poussant les structures cellulaires rompues de la chair vers le côté par l'impulsion des ondes ultrasonores.

2. Procédé selon la revendication 1, le morceau de fruit ou de légume étant irradié par des ondes ultrasonores au moyen d'une sonotrode, de manière préférée au moyen d'une sonotrode montée de manière ajustable.

3. Procédé selon l'une des revendications 1 à 2, les ondes ultrasonores ayant une fréquence dans la plage de 20 à 2000 kHz.

4. Procédé selon l'une des revendications 1 à 3, le liquide dans la chair étant soumis à une température allant jusqu'à 5000 K et/ou à une pression allant jusqu'à 1000 bar et/ou à une vitesse d'écoulement allant jusqu'à 400 km/h lors du chauffage par cavitation acoustique.

5. Procédé selon l'une des revendications 1 à 4, la chair étant microcuite pendant le chauffage du liquide.

6. Procédé selon l'une des revendications 1 à 5, le morceau de fruit ou de légume évidé étant rempli de produits alimentaires, puis étant irradié avec des ondes ultrasonores et ladite garniture étant cuite conjointement pendant le chauffage du liquide.

7. Procédé selon l'une des revendications 1 à 6, la peau du morceau de fruit ou de légume étant retirée en partie ou en totalité par cavitation acoustique.

8. Procédé selon l'une des revendications 1 à 7, les cavités formant des motifs ou des structures multidimensionnelles dans le morceau de fruit ou de légume.

9. Procédé selon l'une des revendications 1 à 8, le morceau de fruit ou de légume étant choisi parmi des cucurbitacées, de manière préférée des courges, des melons, des concombres et des courgettes.

10. Produit alimentaire prêt à l'emploi comprenant un ou plusieurs morceaux de fruit ou de légume, le ou les morceaux de fruit ou légume étant façonnés avec le procédé selon l'une des revendications 1 à 9.

11. Utilisation d'ondes ultrasonores pour façonner des fruits ou des légumes par cavitation acoustique.
